# EUROPÄISCHE PATENTANMELDUNG

(11) **EP 1 972 296 A1**
(43) Veröffentlichungstag der Anmeldung: **24.09.2008**
(21) Anmeldenummer: 08004870.5
(22) Anmeldetag: 14.03.2008
(51) Int. Cl.: A61C 5/06, A61C 13/12, B01F 11/00, B06B 1/04

(54) **Dentalgeräterüttelvorrichtung**

(30) Priorität: 19.03.2007 DE 102007013700
(71) Anmelder: Renfert GmbH, 78247 Hilzingen (DE)
(72) Erfinder: Goldhagen, Sven, 78224 Singen (DE); Bertiller, Marco, 88690 Uhldingen-Mühlhofen (DE); Jilg, Hans Peter, 78247 Hilzingen (DE)
(74) Vertreter: Daub, Thomas

(57) **Zusammenfassung**

Die Erfindung geht aus von einer Dentalgeräterüttelvorrichtung mit einem Grundkörper (10; 10a), einer Schwingungseinheit (12; 12a), die zu einer Schwingung relativ zum Grundkörper (10; 10a) vorgesehen ist, und einer Federeinheit (14), die den Grundkörper (10; 10a) mit der Schwingungseinheit (12; 12a) verbindet und zumindest zwei Federelemente (15, 16) aufweist.

Es wird vorgeschlagen, dass die Federelemente (15, 16) unterschiedlichen Auslenkrichtungen (18, 19) der Schwingungseinheit (12; 12a) zugeordnet sind.

## Beschreibung

### Stand der Technik

Die Erfindung geht aus von einer Dentalgeräterüttelvorrichtung nach dem Oberbegriff des Anspruchs 1.

Aus der Druckschrift DE 44 42 262 C2 ist eine Dentalgeraterüttelvorrichtung mit einem Grundkörper und einer Schwingungseinheit bekannt, die zu einer Schwingung relativ zum Grundkörper vorgesehen ist. Ferner umfasst die Dentalgeräterüttelvorrichtung eine Federeinheit, die den Grundkörper mit der Schwingungseinheit verbindet. Die Federeinheit weist mehrere U-förmige Federelemente auf, die bei einer Auslenkung der Schwingungseinheit in Richtung des Grundkörpers zusammengedrückt werden.

### Vorteile der Erfindung

Die Erfindung geht aus von einer Dentalgeräterüttelvorrichtung mit einem Grundkörper, einer Schwingungseinheit, die zu einer Schwingung relativ zum Grundkörper vorgesehen ist, und einer Federeinheit, die den Grundkörper mit der Schwingungseinheit verbindet.

Es wird vorgeschlagen, dass die Federeinheit wenigstens zwei Federelemente aufweist, die unterschiedlichen Auslenkrichtungen der Schwingungseinheit zugeordnet sind. Dadurch kann vorteilhaft eine flexible Ausgestaltung der Schwingung erreicht werden. Unter "zugeordnet" soll dabei insbesondere verstanden werden, dass die Federelemente bei einer Auslenkung der Schwingungseinheit in eine Auslenkrichtung eine unterschiedliche Belastungsrichtung aufweisen. Insbesondere kann eine Belastungsrichtung einer Auslenkrichtung entsprechen. Unter einer "Auslenkrichtung" der Schwingungseinheit soll insbesondere eine Bewegungsrichtung der Schwingungseinheit bei einer Bewegung aus einem Ruhezustand der Schwingungseinheit relativ zum Grundkörper verstanden werden.

Ferner wird vorgeschlagen, dass die Federelemente gegeneinander vorgespannt sind, wodurch ein einfacher Aufbau und insbesondere ein vorteilhaftes Schwingungsverhalten erreicht werden können.

In einer weiteren Ausgestaltung der Erfindung wird vorgeschlagen, dass die Federelemente in Schwingungsrichtung hintereinander angeordnet sind. Damit kann insbesondere eine einfache Konstruktion des Geräts erreicht werden. Die Federelemente können dabei in Schwingungsrichtung betrachtet zumindest teilweise nebeneinander angeordnet und/oder besonders vorteilhaft zumindest teilweise überdeckend und besonders vorteilhaft vollständig überdeckend bzw. linear hintereinander angeordnet werden.

Vorzugsweise umfasst die Schwingungseinheit einen ersten Schwingungskörper und zumindest einen zweiten Schwingungskörper, der relativ zum ersten Schwingungskörper beweglich gelagert ist. Dadurch kann ein vorteilhaftes Schwingungsverhalten erreicht werden.

Ferner wird vorgeschlagen, dass wenigstens ein Federelement als eine Schraubendruckfeder ausgebildet ist, wodurch eine einfache und kostengünstige Herstellung und ein gutes Schwingungsverhalten erreicht werden können-.

In einer bevorzugten Ausgestaltung der Erfindung weist die Dentalgeräterüttelvorrichtung eine Dämpfungseinheit auf, die zu einer Dämpfung einer Schwingung der Schwingungseinheit vorgesehen ist, wodurch die Güte der Schwingung und das Schwingungsverhalten verändert werden können. Die Dämpfungseinheit kann insbesondere aus einem gummiartigen Material hergestellt sein. Unter einem "gummiartigen Material" kann insbesondere verstanden werden, dass sich das betreffende Material zumindest teilweise ähnlich wie Gummi verhält und/oder dass das betreffende Material zumindest teilweise aus Gummi besteht.

Zweckmäßigerweise weist die Federeinheit wenigstens zwei Positionierelemente auf, die im montierten Zustand zumindest teilweise ineinander eingreifen. Es kann dadurch eine Platzersparnis erreicht werden. Unter einem "Positionierelement" soll dabei insbesondere ein Element verstanden werden, das zur Positionierung eines Federelements vorgesehen ist.

In einer bevorzugten Ausgestaltung der Erfindung sind die Positionierelemente baugleich ausgeführt. Insbesondere kann eine Anzahl verschiedener Bauteile minimiert und dadurch bedingt können Herstellkosten, Montageaufwand reduziert werden und es kann eine besonders einfache Montage erreicht werden.

Vorteilhaft ist die Verwendung einer Abstelleinheit, die wenigstens ein Federelement aufweist. Dadurch kann eine Übertragung von Schwingungen der Schwingungseinheit auf die Aufstellfläche vorteilhaft vermindert werden. Unter einer "Abstelleinheit" soll insbesondere eine Vorrichtung verstanden werden, die dazu vorgesehen ist, Lagerkräfte des Grundkörpers auf einer korrespondierenden Aufstellfläche aufzunehmen.

Vorzugsweise weist die Dentalgeräterüttelvorrichturig zumindest ein erstes Federmittel auf, welches an dem ersten Schwingungskörper und an dem zweiten Schwingungskörper befestigt ist. Auf diese Weise kann ein vorteilhaftes Schwingverhalten der Schwingungseinheit erreicht werden.

Mit Vorteil weist die Dentalgeräterüttelvorrichtung zumindest ein zweites Federmittel auf, welches an dem ersten Schwingungskörper und an dem zweiten Schwingungskörper befestigt ist. Hierdurch kann bei einem vorteilhaften Schwingverhalten eine stabile Konstruktion erreicht werden.

Ferner wird vorgeschlagen, dass das erste und das zweite Federmittel unterschiedlichen Auslenkrichtungen des zweiten schwingungskörpers zugeordnet sind. Dadurch kann vorteilhaft eine besonders flexible Ausgestaltung der Schwingung erreicht werden.

Vorzugsweise wird vorgeschlagen, dass die beiden Federmittel in einem Zustand außer Betrieb gegeneinander vorgespannt sind. Auf diese Weise kann ein stabiler Aufbau erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Draufsicht auf eine Dentalgeräterüttelvorrichtung,
- Fig. 2: einen Schnitt durch die Dentalgeräterüttelvorrichtung,
- Fig. 3: eine Vergrößerung zweier ineinander greifender Positionierelemente und
- Fig. 4: einen Schnitt durch ein alternatives Ausführunlgsbeispiel einer Dentalgeräterüttelvorrichtung.

### Beschreibung des Ausführungsbeispiels

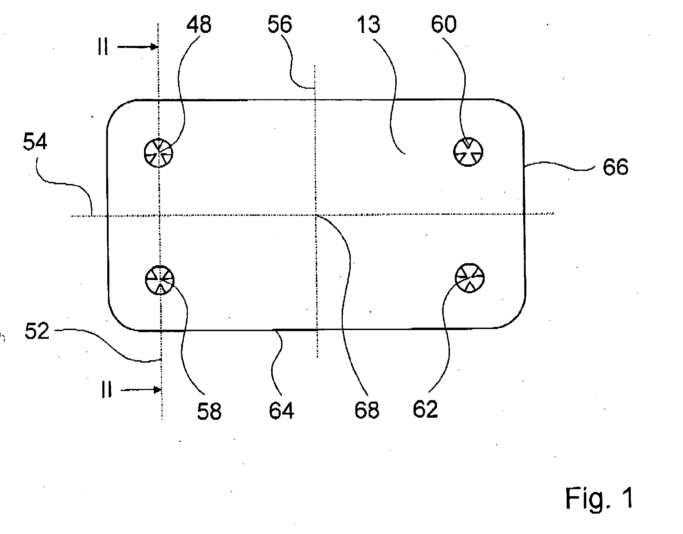

Figur 1 zeigt die Draufsicht auf eine Dentalgeräterüttelvorrichtung in vertikaler Richtung von oben. Die Dentalgeräterüttelvorrichtung weist eine Schwingplatte 13 auf, die vier Löcher aufweist, welche mit Positionierelementen 48, 58, 60 und 62 versehen sind. Durch einen Mittelpunkt 68 der Schwingplatte 13 verläuft eine Spiegelebene 54 vertikal zur Schwingplatte 13 und parallel zu einem langen Rand 64 der Schwingplatte 13. Ebenfalls durch den Mittelpunkt 68 der Schwingplatte 13 verläuft eine Spiegelebene 56 vertikal zur Schwingplatte 13 und parallel zu einem kurzen Rand 66 der Schwingplatte 13. Eine weitere Ebene 52 verläuft vertikal zur Schwingplatte 13, mittig durch die Positionierelemente 48, 58 und parallel zu dem kurzen Rand 66.

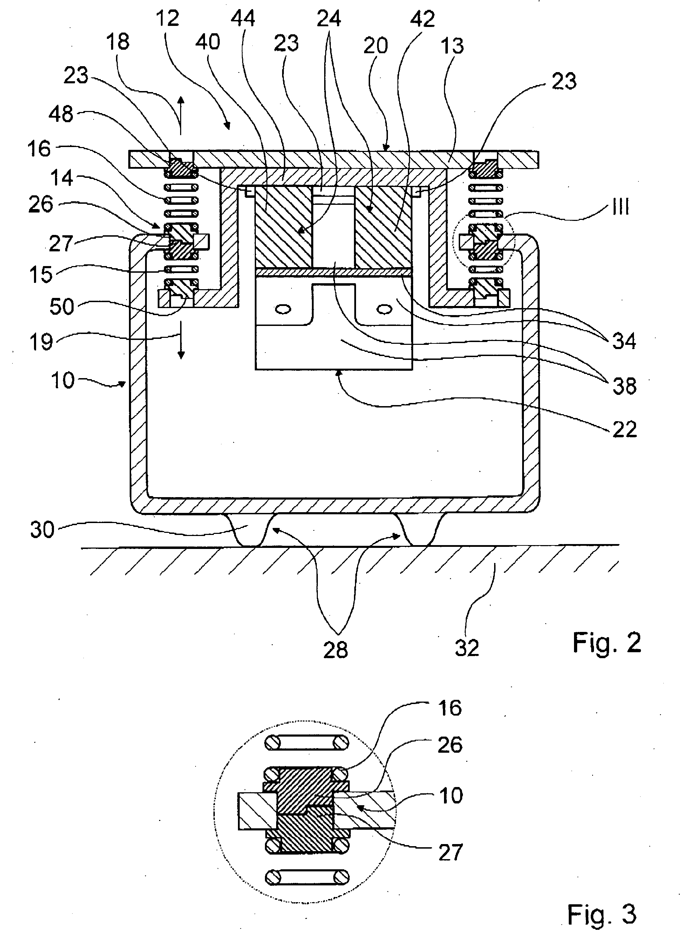

Figur 2 zeigt einen Schnitt durch die Dentalgeräterüttelvorrichtung in der Ebene 52 gemäß Figur 1. Die Dentalgeräterüttelvorrichtung weist einen Grundkörper 10 auf, der als Gehäuse ausgebildet ist. Der Grundkörper 10 weist eine U-förmige Gestalt auf. Seine Enden sind so nach innen gebogen, dass sie im Wesentlichen horizontal verlaufen. Ferner ist die Dentalgeräterüttelvorrichtung mit einer Schwingungseinheit 12 versehen, die einen ersten Schwingungskörper 20, einen zweiten Schwingungskörper 22 und eine Dämpfungseinheit 24 aufweist.

Die Dämpfungseinheit 24 ist ausgebildet in Form von vier Gummiverbindungsstücken 40, 42, wobei nur zwei dargestellt sind.

Die Gummiverbindungsstücke 40, 42 sind als Gummibeine ausgebildet und verlaufen im Wesentlichen in vertikaler Richtung. Die Dämpfungseinheit 24 dämpft Schwingungen des ersten Schwingungskörpers 20 relativ zum zweiten Schwingungskörper 22.

Der Grundkörper 10 weist eine Abstelleinheit 28 auf, die wiederum vier Federelemente 30 aufweist. Das Federelement 30 ist als abgestumpfter Gummikegel ausgebildet. Mittels der Abstelleinheit 28 ist die Dentalgeräterüttelvorrichtung auf einer Aufstellfläche 32 positioniert.

Der erste Schwingungskörper 20 weist die Schwingplatte 13 zum Aufstellen eines Mischgutträgers, ein Eisenjoch 23, das an der Schwingplatte 13, insbesondere an der unteren Fläche, angeschraubt ist, ein erstes Positionierelement 48 und einen Bügel 44 auf, der ebenfalls an der Schwingplatte 13 angeschraubt ist. Der Bügel 44 überlappt in Auslenkrichtung 18 bzw. 19 mit einem eingebogenen Ende des Grundkörpers 10.

Der zweite Schwingungskörper 22 weist eine Spule 38 und ein Verbindungsstück 34 auf, das die Spule 38 mit den Gummiverbindungsstücken 40 und 42 verbindet.

Der erste und der zweite Schwingungskörper 20, 22 werden durch die Gummiverbindungsstücke 40, 42 verbunden. Die Gummiverbindungsstücke 40, 42 liegen an dem Bügel 44 an und werden von dem Verbindungsstück 34 abgestützt. Die Gummiverbindungsstücke 40, 42 greifen ausgehend von dem Bügel 44 in den Innenbereich des Grundkörpers 10 ein. Der Grundkörper 10 und die Schwingungseinheit 12 sind durch die Federeinheit 14 und weitere drei Federeinheiten, die zu der Federeinheit 14 baugleich sind, verbunden. Diese vier Federeinheiten sind spiegelsymmetrisch angeordnet: Die Federeinheiten weisen zusammen die Spiegelebenen 54 und 56 auf (siehe Figur 1) und werden durch Spiegelung an diesen Spiegelebenen 54, 56 aufeinander abgebildet. Zu Positionierelementen 26, 27, 48 und 50 gibt es in der Dentalgeräterüttelvorrichtung in gleicher Weise wie für die Federeinheit 14 jeweils drei weitere baugleiche Bauelemente, für die ebenfalls die Spiegelebenen 54 und 56 Symmetrieebenen sind. Für das Positionierelement 48 sind diese baugleichen Bauteile die Positionierelemente 58, 60 und 62 (siehe Figur 1). Zu dem Bügel 44 gibt es in der Dentalgeräterüttelvorrichtung in gleicher Weise wie für die Federeinheit 14 einen weiteren baugleichen Bügel, für die die Spiegelebene 56 Symmetrieebene ist.

Die Federeinheit 14 weist Federelemente 15 und 16 auf, die als Schraubendruckfedern ausgebildet sind. Die Federelemente 15 und 16 werden durch die Positionierelemente 48, 50, 26 und 27 in Position gehalten. Dabei wird das Federelement 16 von dem Positionierelement 26 abgestützt. Entsprechend ist die Situation für das Federelement 15 und das Positionierelement 50. Die mögliche Ausdehnung der Federelemente 15, 16 in vertikaler Richtung wird durch den Bügel 44 begrenzt. Die Summe der Länge der Federelemente 15, 16 und der gemeinsamen Ausdehnung der positionierelemente 26, 27 in vertikaler Richtung in freiem und uneingespannLem Zustand ist größer als die vertikale Ausdehnung des Bügels 44, welche von dem oberen Ende des Positionierelements 50 bis zur Schwingplatte 13 gemessen wird. Die Federhärten der Federelemente 15, 16 sind von der Art, dass sich beide Federelemente 15, 16 bei unausgelenkter Schwingungseinheit 12 in teilweise komprimiertem Zustand befinden, die Federeinheit 14 kann also als vorgespannt bezeichnet werden. Das Positionierelement 48 ist durch eine Klemmverbindung zwischen dem Federelement 16 und der Schwingplatte 13 fixiert. Ferner ragt das Positionierelement 48 horizontal über die Einlassung in der Schwingplatte 13 hinaus, die für das Positionierelement 48 vorgesehen ist, und liegt an dieser Stelle zwischen dem Federelement 16 und der Schwingplatte 13. Das Positionierelement 26 bzw. 27 ist durch eine Klemmverbindung analog zum Positionierelement 48 zwischen dem Federelement 16 bzw. 15 und dem Grundkörper 10 fixiert. Ebenso ist das Positionierelement 50 analog zum Positionierelement 48 durch eine Klemmverbindung zwischen dem Federelement 15 und dem Bügel 44 fixiert.

Die Positionierelemente 26 und 27 greifen ineinander und weisen dadurch in vertikaler Richtung insgesamt eine geringe Ausdehnung auf. Eine Auslenkung der Schwingungseinheit 12 in eine Richtung 18 relativ zum Grundkörper bewirkt eine Kompression und damit eine Belastung des Federelements 15. Damit ist das Federelement 15 der Auslenkrichtung 18 zugeordnet. Analog lässt sich das Federelement 16 der Auslenkrichtung 19 zuordnen. Die Auslenkrichtung 18 zeigt im Wesentlichen vertikal nach oben, die Auslenkrichtung 19 im Wesentlichen vertikal nach unten.

Die Spule 38 wird mit Hilfe eines Wechselstroms im Wesentlichen periodisch angeregt. Damit wird das Eisenjoch 23 im wesentlichen periodisch angezogen, was eine Schwingung zwischen dem ersten Schwingungskörper 20 und dem zweiten Schwingungskörper 22 bewirkt. Die Dämpfungseinhcit 24 wirkt sich hierbei dämpfend aus. Die Spule 38 regt auch eine Schwingung der Schwingungseinheit 12 relativ zum Grundkörper 10 an. Die Abstelleinheit 28 vermindert die Übertragung von Schwingungen auf die Aufstellfläche 32.

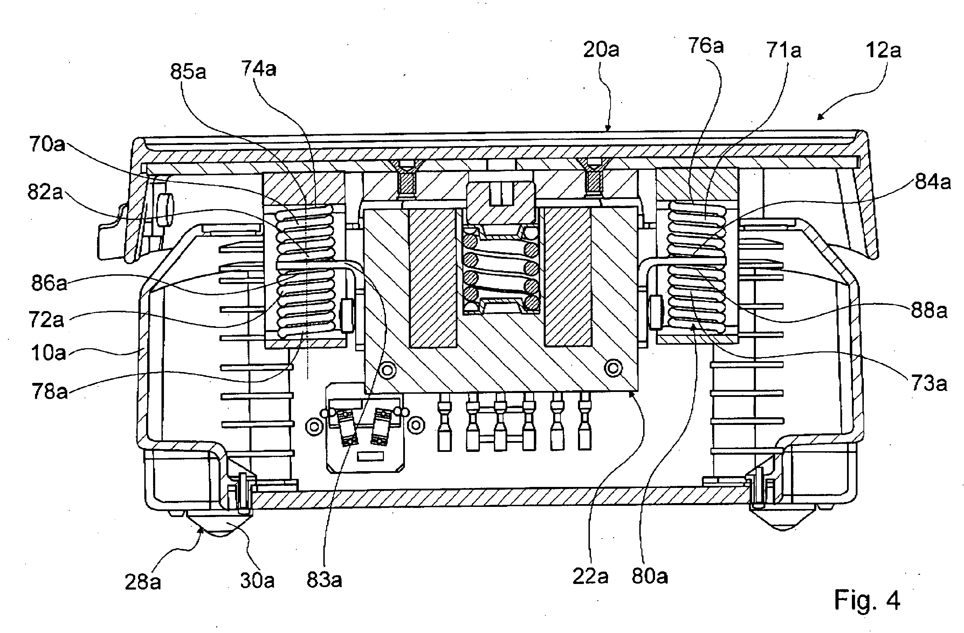

In Figur 4 ist ein alternatives Ausführungsbeispiel einer Dentalgeräterüttelvorrichtung dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen des Ausführungsbeispiels in der Figur 4 der Buchstaben "a" hinzugefügt. Die nachfolgende Beschreibung beschränkt sich im Wesentlichen auf die Unterschiede zu dem Ausführungsbeispiel in den Figuren 1 bis 3, wobei bezüglich gleich bleibender Bauteile, Merkmale und Funktionen auf die Beschreibung des Ausführungsbeispiels in der Figur 4 verwiesen werden kann.

Eine Schwingungseinheit 12a der in Figur 4 dargestellten Dentalgeräterüttelvorrichtung weist Federmittel 70a, 71a, 72a, 73a auf, welche als Spiralfedern ausgebildet sind. Die Federmittel 70a, 71a, 72a, 73a sind jeweils an einem ihrer Enden 74a, 76a, 78a, 80a an einem ersten Schwingungskörper 20a der Schwingungseinheit 12a befestigt. Außerdem sind die Federmittel 70a, 71a, 72a, 73a jeweils an einem weiteren ihrer Enden 82a, 84a, 86a, 88a an einem zweiten Schwingungskörper 22a der Schwingungseinheit 12a befestigt.

Die Federmittel 70a, 72a sind unterschiedlichen Auslenkrichtungen des zweiten Schwingungskörpers 22a zugeordnet. Wird der zweite Schwingungskörper 22a in einer Bedienposition der Dentalgeräterüttelvorrichtung in eine vertikale Richtung nach oben ausgelenkt, so wird das Federmittel 70a durch einen Bügel 83a des zweiten Schwingungskörpers 22a nach oben gedrückt. Hierdurch ist das Federmittel 70a dieser Richtung der Auslenkung zugeordnet. Wird der zweite Schwingungskörper 22a in einer Bedienposition der Dentalgeräterüttelvorrichtung in eine vertikale Richtung nach unten ausgelenkt, so wird das Federmittel 72a durch den Bügel 83a des zweiten Schwingungskörpers 22a nach unten gedrückt, wodurch das Federmittel 72a dieser Auslenkrichtung zugeordnet ist.

In einem vollständig montierten Zustand, in dem die Dentalgeräterüttelvorrichtung außer Betrieb ist, sind die Federmittel 70a, 72a gegeneinander vorgespannt. Hierbei sind die Federmittel 70a, 72a beide komprimiert und eine Gerade 85a verläuft durch einen Massenmittelpunkt des Federmittels 70a und durch einen Massenmittelpunkt des Federmittels 72a. Ferner sind Haupterstreckungsrichtungen der Federmittel 70a, 72a parallel zu der Gerade 85a. Die beiden Federmittel 70a, 72a sind entlang der Gerade 85a komprimiert.

### Bezugszeichen

- 10: Grundkörper
- 12: Schwingungseinheit
- 13: Schwingplatte
- 14: Federeinheit
- 15: Federelement
- 16: Federelement
- 18: Auslenkrichtung
- 19: Auslenkrichtung
- 20: erster Schwingungskörper
- 22: zweiter Schwingungskörper
- 23: Eisenjoch
- 24: Dämpfungseinheit
- 26: Positionierelement
- 27: Positionierelement
- 28: Abstelleinheit
- 30: Federelement
- 32: Aufstellfläche
- 34: Verbindungsstück
- 38: Spule
- 40: Gummiverbindungsstück
- 42: Gummiverbindungsstück
- 44: Bügel
- 48: Positionierelement
- 50: Positionierelement
- 52: Ebene
- 54: Spiegelebene
- 56: Spiegelebene
- 58: Positionierelement
- 60: Positionierelement
- 62: Positionierelement
- 64: langer Rand
- 66: kurzer Rand
- 68: Mittelpunkt
- 70: Federmittel
- 71: Federmittel
- 72: Federmittel
- 73: Federmittel
- 74: Ende
- 76: Ende
- 78: Ende
- 80: Ende
- 82: Ende
- 83: Bügel
- 84: Ende
- 85: Gerade
- 86: Ende
- 88: Ende

## Patentansprüche

1. Dentalgeräterüttelvorrichtung mit einem Grundkörper (10; 10a), einer Schwingungseinheit (12; 12a), die zu einer Schwingung relativ zum Grundkörper (10; 10a) vorgesehen ist, und einer Federeinheit (14), die den Grundkörper (10; 10a) mit der Schwingungseinheit (12; 12a) verbindet und zumindest zwei Federelemente (15, 16) aufweist,
**dadurch gekennzeichnet,**
**dass** die Federelemente (15, 16) unterschiedlichen Auslenkrichtungen (18, 19) der Schwingungseinheit (12; 12a) zugeordnet sind.

2. Dentalgeräterüttelvorrichtung nach Anspruch 1,
**dadurch gekennzeichnet,**
**dass** die Federelemente (15, 16) gegeneinander vorgespannt sind.

3. Dentalgeräterüttelvorrichtung nach Anspruch 1, oder 2,
**dadurch gekennzeichnet,**
**dass** die Federelemente (15, 16) in Auslenkrichtung hintereinander angeordnet sind.

4. Dentalgeräterüttelvorrichtung nach einem der vorhergehenden Ansprüche,
**dadurch gekennzeichnet,**
**dass** die Schwingungseinheit (12; 12a) einen ersten Schwingungskörper (20; 20a) und zumindest einen zweiten Schwingungskörper (22; 22a) umfasst, der relativ zum ersten Schwingungskörper (20; 20a) beweglich gelagert ist.

5. Dentalgeräterüttelvorrichtung nach einem der vorhergehenden Ansprüche,
**dadurch gekennzeichnet,**
**dass** wenigstens ein Federelement (15) als Schraubendruckfeder ausgebildet ist.

6. Dentalgeräterüttelvorrichtung nach einem der vorhergehenden Ansprüche,
**gekennzeichnet durch**
eine Dämpfungseinheit (24), die zur Dämpfung einer Schwingung der Schwingungseinheit (12) vorgesehen ist.

7. Dentalgeräterüttelvorrichtung nach einem der vorhergehenden Ansprüche,
**dadurch gekennzeichnet,**
**dass** die Federeinheit (14) wenigstens zwei Positionierelemente (26, 27) aufweist, die im montierten Zustand zumindest teilweise ineinander eingreifen.

8. Dentalgeräterüttelvorrichtung nach Anspruch 7,
**dadurch gekennzeichnet,**
**dass** die Positionierelemente (26, 27, 48, 50, 58, 60; 62) baugleich ausgeführt sind.

9. Dentalgeräterüttelvorrichtung nach einem der vorhergehenden Ansprüche,
**gekennzeichnet durch**
eine Abstelleinheit (28; 28a), die wenigstens ein Federelement (30; 30a) aufweist.

10. Dentalgeräterüttelvorrichtung zumindest nach Anspruch 4,
**gekennzeichnet durch**
zumindest ein erstes Federmittel (70a, 71a), welches an dem ersten Schwingungskörper (20a) und an dem zweiten Schwingungskörper (22a) befestigt ist.

11. Dentalgeräterüttelvorrichtung nach Anspruch 10,
**gekennzeichnet durch**
zumindest ein zweites Federmittel (72a, 73a); welches an dem ersten Schwingungskörper (20a) und an dem zweiten schwingungskörper (22a) befestigt ist.

12. Dentalgeräterüttelvorrichtung nach Anspruch 11,
**dadurch gekennzeichnet,**
**dass** das erste und das zweite Federmittel (70a, 71a, 72a, 73a) unterschiedlichen Auslenkrichtungen des zweiten Schwingungskörpers (22a) zugeordnet sind.

13. Dentalgeräterüttelvorrichtung nach einem der Ansprüche 11 oder 12,
**dadurch gekennzeichnet,**
**dass** die beiden Federmittel (70a, 71a, 72a, 73a) in einem Zustand außer Betrieb gegeneinander vorgespannt sind.
